(19) Europäisches Patentamt
European Patent Office
Office européen des brevets

(11) EP 2 738 927 A1

(12) EUROPEAN PATENT APPLICATION
published in accordance with Art. 153(4) EPC

(43) Date of publication:
04.06.2014 Bulletin 2014/23

(51) Int Cl.:
H02M 3/155 (2006.01)      G05F 1/67 (2006.01)
H02M 7/48 (2007.01)

(21) Application number: 12819576.5

(22) Date of filing: 06.07.2012

(86) International application number:
PCT/JP2012/067345

(87) International publication number:
WO 2013/018507 (07.02.2013 Gazette 2013/06)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 29.07.2011   JP 2011166923

(71) Applicant: Sanyo Electric Co., Ltd.
Moriguchi-shi, Osaka 570-8677 (JP)

(72) Inventor: ITOH Kazuo
Moriguchi-shi
Osaka 570-8677 (JP)

(74) Representative: Goddar, Heinz J.
Boehmert & Boehmert
Pettenkoferstrasse 20-22
80336 München (DE)

(54) **POWER CONVERSION APPARATUS**

(57)      [Problem] To provide a power conversion apparatus that easily eliminates fluctuations of output from solar cells and the like. [Solution] This power conversion apparatus is provided with: a DC link unit; a first transformer circuit for transforming direct-current voltages outputted from a direct current power supply into direct current voltages to the DC link unit; a second transformer circuit for direct-current direct current voltages in two ways between the direct current power supply and the DC link unit; a control unit, which determines direct-current operation quantities for respective transformer circuits, and on the basis of the operation quantities, controls direct-current operations of the circuits; an alternating current-side terminal having an alternating current power line connected thereto; an inverter circuit, which performs direct current to alternating current conversion of the voltages transmitted from the DC link unit to the alternating current-side terminal and/or alternating current to direct current conversion of the voltages transmitted from the alternating current-side terminal to the DC link unit. The control unit determines the operation direction and the operation quantity of the second transformer circuit using information of the operation quantity of the first transfer circuit.

FIG. 1

**Description**

TECHNICAL FIELD

The present invention relates to a power conversion apparatus for converting electric power.

BACKGROUND ART

Power conversion apparatuses for converting power between a DC side and an AC side have been used widely. For example, such power conversion apparatuses have been used as devices for linking generators, or the like, to grid.
Patent Reference 1 discloses a power conversion apparatus having a configuration in which a plurality of generators is DC connected by way of step-up circuits and reverse current-preventing diodes and power is supplied to a grid with one inverter. According to this power conversion apparatus, maximum power tracking control is performed by changing in sequence the duty of the step-up circuits connected to each of the plurality of generators so that the AC power output from the inverter is maximized.
[Patent Reference 1]: Japanese Laid-open Patent Application No. 2003-9537

DISCLOSURE OF THE INVENTION

[Problems the Invention Is Intended To Solve]

A power conversion apparatus is used, for example, as a device for linking a solar cell (PV), or the like, to a grid. In such power conversion apparatus, when rapid fluctuation occurs in the output of the solar cell, a fault may be brought about in the connected grid or load, or the like.
In consideration of the abovementioned problem, an object of the present invention is to provide a power conversion apparatus with which fluctuation of output of a solar cell, or the like, can be readily addressed.

[Means for Solving the Abovementioned Problems]

In order to achieve the abovementioned object, the power conversion apparatus according to the present invention has a configuration comprising: a DC link unit; a first voltage converter having one end connected to the DC link unit, and adapted for converting DC voltage to the DC link unit from a DC power supply connected to the other end; a second voltage converter having one end connected to the DC link unit, for converting DC voltage in two directions between a DC power supply connected to the other end and the DC link unit; a control unit for determining a controlled value for converting respectively for the first voltage converter and the second voltage converter and controlling the converting operations of these circuits in accordance with the controlled values; an AC-side terminal connected with an AC line; and an inverter circuit for performing DC-AC conversion of voltage to the AC-side terminal from the DC link unit and/or AC-DC conversion of voltage to the DC link unit from the AC-side terminal; wherein in the control unit, the direction of operation and the controlled value of the second voltage converter are determined using information of the controlled value of the first voltage converter.
According to the present configuration, fluctuation of output of a solar cell, or the like, can be readily addressed.

[Effect of the Invention]

According to the power conversion apparatus according to the present invention, fluctuation of output of a solar cell, or the like, can be readily addressed.

BRIEF DESCRIPTION OF THE DRAWINGS

FIG. 1 is a schematic diagram of the power conversion apparatus according to a first embodiment of the present invention;
FIG. 2 is a schematic diagram of the one-way chopper circuit and the one-way chopper control circuit according to the first embodiment of the present invention;
FIG. 3 is a schematic diagram of the power conversion apparatus according to a second embodiment of the present invention; and
FIG. 4 is a schematic diagram of the power conversion apparatus according to a third embodiment of the present invention.

BEST MODE FOR CARRYING OUT THE INVENTION

Embodiments of the present invention are described below using a first embodiment to a third embodiment as examples.

1. First embodiment

[Configuration of the power conversion apparatus]

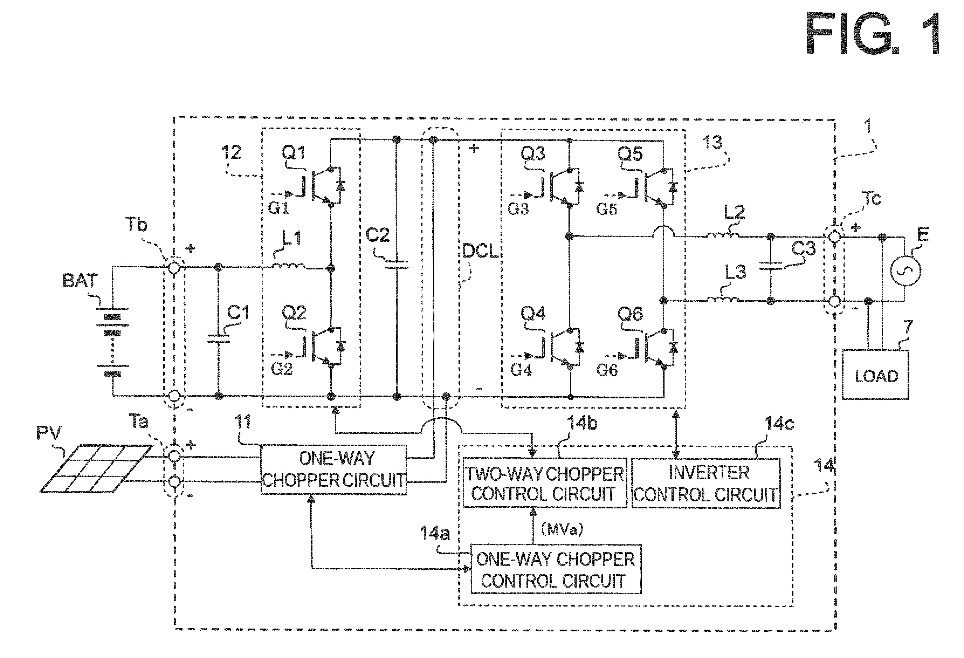

A first embodiment is first described. FIG. 1 is a schematic diagram of the power conversion apparatus 1 according to the present embodiment. The power conversion apparatus 1 has a one-way chopper circuit 11 (one mode of a first voltage converter), a two-way chopper circuit 12 (one mode of a second voltage converter), an inverter circuit 13, a control unit 14, capacitors (C1 to C3), reactors (L2 and L3), and external terminals (Ta to Tc).

The power conversion apparatus 1 is connected to a solar cell PV (one mode of a DC power supply and a generator) for generating electricity using sunlight, a storage device BAT (for example, a secondary battery, capacitor, or the like) capable of charging and discharging, and a grid E (one mode of an AC line), and is used as an device for linking the solar cell PV or storage device BAT to the grid E.

However, the power conversion apparatus 1 may be connected with a fuel cell (FC), or the like, instead of a solar cell. A DC link unit DCL connected with each chopper circuit (11 and 12) is provided on the DC side (the side not connected to the external terminal Tc) of the inverter circuit 13. The DC link unit DCL is a portion in which a plurality of voltage converters are connected by a DC line.

The front end side of the one-way chopper circuit 11 is connected to the external terminal Ta, and the rear end side is connected to the DC link unit DCL. In the one-way chopper circuit 11, DC voltage of DC power output from the solar cell PV and input to the front end side is converted, and the converted DC power is outputted to the rear end side (supplies to the DC link unit DLC). In other words, the one-way chopper circuit 11 operates to perform converting of DC voltage in one direction. "Converting" in the present application refers to changing of the magnitude of voltage without limitation to stepping up or stepping down. The one-way chopper circuit 11 may be either a step-up circuit or a step-down circuit, and may also be a step-up/step-down circuit. A more detailed configuration example of the one-way chopper circuit 11 will be described anew.

The two-way chopper circuit 12, for example, is a two-way step-up/step-down chopper circuit, and has a reactor L1 and switching elements (Q1 and Q2). In each embodiment of the present invention, the switching elements (Q1 to Q7) are NPN-type IGBT, but another kind, such as power MOSFET, also may be adopted.

The emitter of the switching element Q1 is connected to the collector of the switching element Q2, and to the positive electrode side of the external terminal Tb by way of the reactor L1. The emitter of the switching element Q2 is connected to the negative electrode side of the external Tb and the negative electrode side of the DC link unit DCL. The collector of the switching element Q1 is connected to the positive electrode side of the DC link unit DCL.

A diode is reverse-parallel connected to each of the switching elements (Q1 and Q2). In each of the switching elements (Q1 and Q2), self-corresponding drive pulse signals (G1 and G2) are inputted from a two-way chopper control circuit 14b, and switching between conducting and non-conducting is performed in accordance with the input drive pulse signals.

In the two-way chopper circuit 12, the switching element Q1 is set to non-conducting and the switching element Q2 is set to conducting and non-conducting cyclically in accordance with the drive pulse signals, whereby the voltage of the DC power output from the storage device BAT can be stepped up and supplied to the DC link unit DCL. Also in the two-way chopper circuit 12, the switching element Q2 is set to non-conducting and the switching element S1 is set to conducting and non-conducting cyclically in accordance with the drive pulse signals, whereby the voltage of the DC power supplied to the DC link unit DCL can be stepped down and supplied to the storage device BAT.

Thus both ends of the two-way chopper circuit 12 are connected to the external terminal Tb and the DC link unit DCL, and the DC voltage of the DC power output from either one of the DC link unit DCL and the storage device BAT is converted and supplied to the other. In other words, the two-way chopper circuit 12 operates to perform converting of DC voltage in two directions.

The inverter circuit has fully bridged switching elements (Q3 to Q6). The connection modes of the switching elements (Q3 to Q6) are such that the collector of the switching element Q4 is connected to the emitter of the switching element Q3, the collector of the switching element Q6 is connected to the emitter of the switching element Q5, the collector of the switching element Q5 is connected to the collector of the switching element Q3, and the emitter of the switching element Q4 is connected to the emitter of the switching element Q6.

The connection point between the switching element Q3 and the switching point Q4 is connected to the positive electrode side of the external terminal Tc by way of the reactor L2, and the connection point between the switching element Q5 and the switching element Q6 is connected to the negative electrode side of the external terminal Tc by way of the reactor L3. The connection point between the switching element Q3 and the switching element Q5 is connected to the positive electrode side of the DC link unit DCL, and the connection point between the switching element Q4 and the switching element Q6 is connected to the negative electrode side of the DC link unit DCL.

A diode is reverse-parallel connected to each of the switching elements (Q3 to Q6). In each of the switching elements (Q3 to Q6), self-corresponding drive pulse signals (G3 to G6) are inputted from an inverter control circuit 14c, and switching between conducting and non-conducting is performed in accordance with the input drive pulse signals.

Thus both ends of the inverter circuit 13 are connected to the DC link unit DCL and the external terminal Tc. The inverter circuit 13 performs an operation (DC conversion operation) to convert DC power supplied to the DC link unit DCL to AC power and to output to the external Tc. Because the inverter circuit 13 of present embodiment is used for performing system linkage, the DC power supplied to the DC link unit DCL by the DC conversion operation is converted to AC power synchronized with the DC grid E, and this AC power is overlaid on the AC power of the grid E and is supplied to a load 7. The inverter circuit 13 also performs an operation (AC conversion operation) to convert AC power input from the external terminal Tc to DC and to output to the DC link unit DCL. The inverter circuit 13 may also be configured to perform only either one of the DC conversion operation and the AC conversion operation.

The control unit 14 is a portion for performing each kind of control of the power conversion apparatus 1, and has a one-way chopper control circuit 14a, a two-way chopper control circuit 14b, and an inverter control circuit 14c.

The one-way chopper control circuit 14a is a circuit for controlling the operation of the one-way chopper circuit 11. In the one-way chopper control circuit 14a, a controlled value (amount of modulation) MVa for converting of the one-way chopper circuit 11 is determined, and the operation of the one-way chopper circuit 11 is controlled in accordance with the determined controlled value MVa. A more detailed configuration of the one-way chopper control circuit 14a will be described later.

The two-way chopper control circuit 14b is a circuit for controlling the operation of the two-way chopper circuit 12. In the two-way chopper control circuit 14b, the direction of operation of the two-way chopper circuit (either the direction from the terminal Tb side to the DC link unit DCL side or the reverse direction) and a controlled value MVb for converting are determined. In the two-way chopper circuit 14b, the drive pulse signals (G1 and G2) are outputted in accordance with these determination contents, and the operation of the two-way chopper circuit 12 is controlled. Details of the operating procedure, and the like, of the two-way chopper control circuit 14b will be described later.

The inverter control circuit 14c is a circuit for controlling the operation of the inverter circuit 13. In the inverter control circuit 14c, a power output instruction to the grid (an instruction to output to the grid power having a given instruction value) and a power output instruction from the grid (an instruction to output to the grid power having a given instruction value) are received, the drive pulse signals (G3 to G6) are outputted in accordance with the received instructions, and the operation of the inverter circuit 13 is controlled.

The capacitor C1 is provided between the two electrodes of the external terminal Tb, the capacitor C2 is provided between the two electrodes of the DC link unit DCL, and the capacitor C3 is provided between the two electrodes of the external terminal Tb.

The external terminal Ta is a terminal for connecting the solar cell PV to the power conversion apparatus 1. The positive electrode of the solar cell PV is connected to the positive electrode side of the external terminal Ta, and the negative electrode of the solar cell PV is connected to the negative electrode side of the external terminal Ta. The external terminal Tb is a terminal for connecting the storage device BAT to the power conversion apparatus 1. The positive electrode of the storage device BAT is connected to the positive electrode side of the external terminal Tb, and the negative electrode of the storage device BAT is connected to the negative electrode side of the external terminal Tb. The external terminal Tc is a terminal for connecting the grid E to the power conversion apparatus 1. The positive electrode line of the grid E is connected to the positive electrode side of the external terminal Tc, and the negative electrode line of the grid E is connected to the negative electrode side of the external terminal Tc.

[Configuration of the one-way chopper circuit, and the like]

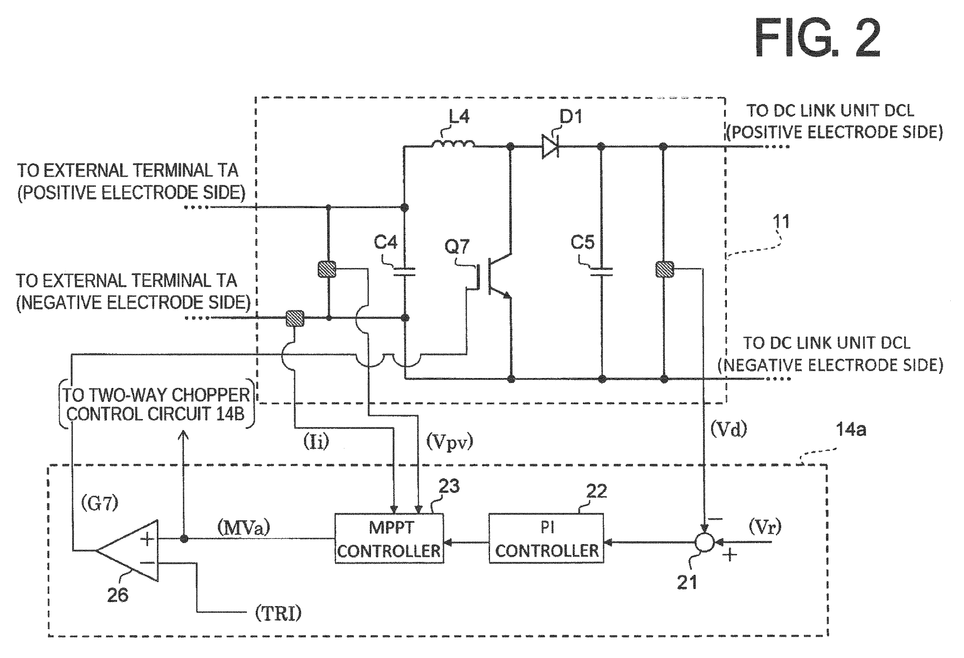

The configurations of the one-way chopper circuit 11 and the one-way chopper control circuit 14a are next described in more detail. FIG. 2 is a schematic diagram of the one-way chopper circuit 11 and the one-way chopper control circuit 14a. As illustrated in the present drawing, the one-way chopper circuit 11 has a switching element Q7, a reactor L4, capacitors (C4 and C5), and a diode D1.

The collector of the switching element Q7 is connected to one end of the reactor L4 and the anode of the diode D1, and the emitter is connected to negative electrode side of the external terminal Ta and the negative electrode side of the DC link unit DCL. In the switching element Q7, self-corresponding drive pulse signals G7 are inputted from the one-way chopper control circuit 14a (PWM comparator 26), and switching between conducting and non-conducting is performed in accordance with the input drive signals.

The other end of the reactor L4 is connected to the positive electrode side of the external terminal Ta and one end of the capacitor C4, and the cathode of the diode D1 is connected to the positive electrode side of the DC link unit DCL and one end of the capacitor C5. The other end of each capacitor (C4 and C5) is connected between the negative electrode side of the external terminal Ta and the negative electrode side of the DC link unit DCL.

Each item of information of a voltage value Vd of the output of the one-way chopper circuit 11, a voltage value (voltage value of the output of the solar cell PV) VPv of the input of the one-way chopper circuit 11, and a current value (current value of the output of the solar cell PV) Ii of the input of the one-way chopper circuit 11 is relayed to the one-way chopper control circuit 14a. Information of an output voltage target value Vr also is inputted to the one-way chopper control circuit 14a. The output voltage target value Vr is a target value of the output voltage of the one-way chopper circuit 11, and, for example, is set to a value a little larger than the voltage value (peak value) of the grid.

The one-way chopper control circuit 14a has a subtraction unit 21, a proportional integral (PI) controller 22, an MPPT controller 23, and a pulse width modulation (PWM) comparator 26. In the subtraction unit 21, a signal representing the difference between the output voltage target value Vr and the voltage value Vd is outputted to the PI controller 22. In the PI controller 22, an output value is calculated so that the value of the signal received from the subtraction unit 21 approaches zero, and a signal representing this outputted value is outputted to the MPPT controller 23.

In the MPPT controller 23, the information of the voltage value Vpv and the current value Ii is received in addition to the output signal of the PI controller 22, and a controlled value MVa of converting of the one-way chopper circuit 11 is calculated so that MPPT control of the output of the solar cell PV is realized. MPPT control is a control method already known for performing maximum power point tracking. In the MPPT controller 23, the controlled value MVa is calculated so that the output power of the solar cell PV is maximized, and a voltage signal of the controlled value MVa is outputted.

The controlled value MVa is regarded to be a quantity for changing an extent a1 (amount of control) of converting of the one-way chopper circuit 11 and matching to a target value. The extent a1 of converting is expressed by a1 = Vin/Vo where Vin is the input voltage and Vo is the output voltage, and the extent a1 of converting of the one-way chopper circuit 11 increases in the stepping-up direction as the controlled value MVa increases. In the one-way chopper circuit 11, a$\geq$1 is set for the step-up circuit.

In the PWM comparator 26, the voltage signal of the controlled value MVa and a prescribed triangular TRI voltage signal (carrier) are inputted, and a pulse signal corresponding to the result of comparison thereof is outputted as the drive pulse signal G7. Carrier modulation PWM control corresponding to the operation of the switching element Q7 is thereby realized. According to the one-way chopper control circuit 14a, the controlled value MVa is determined so that MPPT control of the solar cell PV is realized. The information of the controlled value MVa is intermittently sent also to the two-way chopper control circuit 14b in addition to the PWM comparator 26.

[Control of the two-way chopper circuit]

Control of the two-way chopper circuit 12 is next described in more detail. In the two-way chopper control circuit 14b, the direction of operation and a controlled value MVb are determined so that the power transmission between the storage device BAT and the DC link unit DCL is appropriately performed in accordance with a power output instruction to the grid or a power input instruction from the grid.

The controlled value MVb of the two-way chopper circuit 12 is a quantity for changing an extent a2 (amount of control) of converting of the two-way chopper circuit 12 and matching to a target value. The extent a2 of converting can be expressed by a2=Vin/Vo where Vin is the input voltage and Vo is the output voltage. The extent a2 of converting of the two-way chopper circuit 12 is a2$\geq$0, and becomes a2>1 indicating the "step-up ratio" when performing a step-up operation, and becomes a2<1 indicating the "step-down ratio" when performing a step-down operation. The converting of the two-way chopper circuit 12 increases as the controlled value MVb increases.

For example, in the case in which there was a power output instruction to the grid, and if the output of the one-way chopper circuit 11 is lower than the instruction value, the direction of operation and the controlled value MVb are determined so that the deficit is compensated for (power in the amount of the deficit is transmitted from the storage device BAT to the DC link unit DCL). If the output of the one-way chopper circuit 11 is higher than the instruction value, the direction of operation and the controlled value MVb are determined so that the surplus is absorbed to the storage device BAT (power in the amount of the surplus is transmitted from the DC link unit DCL to the storage device BAT). That is, the controlled value of the two-way chopper circuit 12 is determined using the controlled value of the one-way chopper circuit 11, so that the AC power outputted from the inverter circuit 13 (which may be power inputted to the inverter circuit 13 from the DC link unit if there is no conversion loss in the inverter circuit 13) is brought to a prescribed value (power output instruction).

Also, for example, in the case in which there was a power input instruction to the grid, the direction of operation and the controlled value MVb are determined so that the sum of the output of the one-way chopper circuit 11 and the power equivalent to the instruction value is absorbed (charged) to the storage device BAT.

In the two-way chopper control circuit 14b, the direction of operation and the controlled value MVb of the two-way chopper circuit 12 are determined so that fluctuation of the output power of the inverter circuit 13 (hereinafter sometimes referred to as "inverter output power") is suppressed based on information of the controlled value MVa intermittently received from the one-way chopper control circuit 14.

The controlled value MVb is set in the following manner, depending on the case in which the amount of sunlight decreases, the power output from the solar cell PV is deficient relative to the power output instruction, and power is supplied to the DC link unit DCL from the storage device BAT (the storage device BAT is discharged) by the two-way chopper circuit 12, and the case in which the amount of sunlight is fully obtained, there is surplus power output from the solar cell PV relative to the power output instruction, and power is supplied to the storage device BAT (the storage device BAT is charged) from the DC link unit DCL by the two-way chopper circuit 12.

First described is the case in which the output of the solar cell PV decreases due to a decrease in the amount of sunlight, or the like, the inverter output power in the direction to the grid E decreases, the power output from the solar cell PV is deficient relative to the power output instruction, and the storage device BAT is discharged.

The question of whether discharging of the storage device BAT is required can be determined by detecting whether the controlled value MVa is larger than a prescribed threshold th. This is because the controlled value MVa increases in response to the extent of decrease of the output of the solar cell PV by the characteristics of MPPT control. That is, it can be determined that discharging of the storage device BAT is required in the case in which the controlled value MVa is larger than the prescribed threshold.

In the two-way chopper control circuit 14b, the direction of change and the amount of change of the controlled value MVa is detected from the information of the controlled value MVa intermittently received, and in the two-way chopper control circuit 14b, in the case in which discharging of the storage device BAT is required, the controlled value MVb of the two-way chopper circuit 12 is changed so that the extent a2 of converting of the two-way chopper circuit 12 increases when the controlled value MVa of the first voltage converter changes so that the extent a1 of converting of the one-way chopper circuit 11 increases. In the two-way chopper control circuit 14b, in the case in which discharging of the storage device BAT is required, the controlled value MVb of the two-way chopper circuit 12 is changed so that the extent a2 of converting of the two-way chopper circuit 12 decreases when the controlled value MVa of the one-way chopper circuit 11 changes so that the extent a1 of converting of the one-way chopper circuit 11 decreases.

Thus, in the two-way chopper control circuit 14b, the direction of operation and the controlled value MVb are determined so that fluctuation of the inverter output power accompanying increase and decrease of the output of the solar cell PV is suppressed based on the direction of change and the amount of change of the controlled value MVa.

The controlled value MVb at this time is calculated so as to increase or decrease, for example, in an amount obtained by multiplying the amount of increase or decrease of MVa by a prescribed proportional constant $\alpha1$. This proportional constant $\alpha1$ is a value (for example, a fixed value) that is suitably preset so that fluctuation of the inverter output voltage is suppressed to the extent possible.

The two-way chopper circuit 12 operates so as to compensate (discharge) from the storage device BAT the amount of increase or decrease of the output of the solar cell PV based on the increase or decrease of the controlled value MVb. Fluctuation of the inverter output voltage due to increase and decrease of the output of the solar cell PV is thereby suppressed.

Next described is the case in which the output of the solar cell PV increases due to increase of the amount of sunlight, or the like, the inverter output power in the direction to the grid E increases, there is a surplus in the power output from the solar cell PV relative to the power output instruction, and the storage device BAT is charged.

The question of whether charging of the storage device BAT is required can be determined by detecting whether the controlled value MVa is smaller than a prescribed threshold th. This is because the controlled value MVa decreases in response to the extent of increase of the output of the solar cell PV by the characteristics of MPPT control. That is, it can be determined that charging of the storage device BAT is required in the case in which the controlled value MVa is smaller than the prescribed threshold.

In the two-way chopper control circuit 14b, the direction of change and the amount of change of the controlled value MVa is detected from the information of the controlled value MVa intermittently received, and in the two-way chopper control circuit 14b, in the case in which charging of the storage device BAT is required, the controlled value MVb of the two-way chopper circuit 12 is changed so that the degree a2 of converting of the two-way chopper circuit 12 decreases when the controlled value MVa of the first voltage converter changes so that the degree a1 of converting of the one-way chopper circuit 11 increases. Also in the two-way chopper control circuit 14b, in the case in which charging of the storage device BAT is required, the controlled value MVb of the two-way chopper circuit 12 is changed so that the degree a2 of converting of the two-way chopper circuit 12 increases when the controlled value MVa of the one-way chopper circuit 11 changes so that the degree a1 of converting of the one-way chopper circuit 11 decreases. Thus, in the two-way chopper control circuit 14b, the direction of operation and the controlled value MVb are determined so that fluctuation of the inverter output power accompanying increase and decrease of the output of the solar cell PV is suppressed based on the direction of change and the amount of change of the controlled value MVa.

The controlled value MVb at this time is calculated so as to increase or decrease, for example, in an amount having multiplied the amount of increase or decrease of MVa by a prescribed proportional constant $\alpha2$ (may be the same as the aforementioned $\alpha1$). This proportional constant $\alpha2$ is a value (for example, a fixed value) that is suitably preset so that fluctuation of the output voltage of the inverter circuit 13 is suppressed to the extent possible.

The two-way chopper circuit 12 operates so as to cause the storage device BAT to absorb (be charged by) the amount of increase or decrease of the output of the solar cell PV based on the increase or decrease of the controlled value MVb. Fluctuation of the output voltage of the inverter circuit 13 due to increase and decrease of the output of the solar cell PV is thereby suppressed.

In the two-way chopper control circuit 14b as described above, the direction of change and the amount of change of the controlled value MVa are detected based on the information of the controlled value MVa, and the direction of operation of the two-way chopper circuit 12 or the controlled value MVb is determined so that fluctuation of the inverter output power is suppressed in accordance with the result of that detection.

Thus in the power conversion apparatus 1 of the present embodiment, the direction of operation and the controlled value MVb are determined based on the information of the controlled value MVa. Therefore with the power conversion apparatus 1, fluctuation of the output of a solar cell can be readily addressed while suppressing the effects of scattering of characteristics of circuit elements or errors in voltage and current detection circuits on the precision of control, and suppressing control lags in control of two-way step-up/step-down circuits, and the like, compared with a device for controlling the two-way chopper circuit using results of measurement or calculation of the output voltage from a solar cell, or the like.

The information of the controlled value MVa is originally produced in the process of generating the drive pulse signals G7 by the one-way chopper control circuit 14a. The power conversion apparatus 1 of the present embodiment therefore can be considered as one in which the information of the controlled value MVa is utilized more effectively by using the information of the controlled value MVa not only in the generation of the drive pulse signals G7 but also for control of the two-way chopper circuit.

2. Second embodiment

A second embodiment is next described. The description of the second embodiment focuses on description of portions that are different from the first embodiment, and description of common portions is omitted.

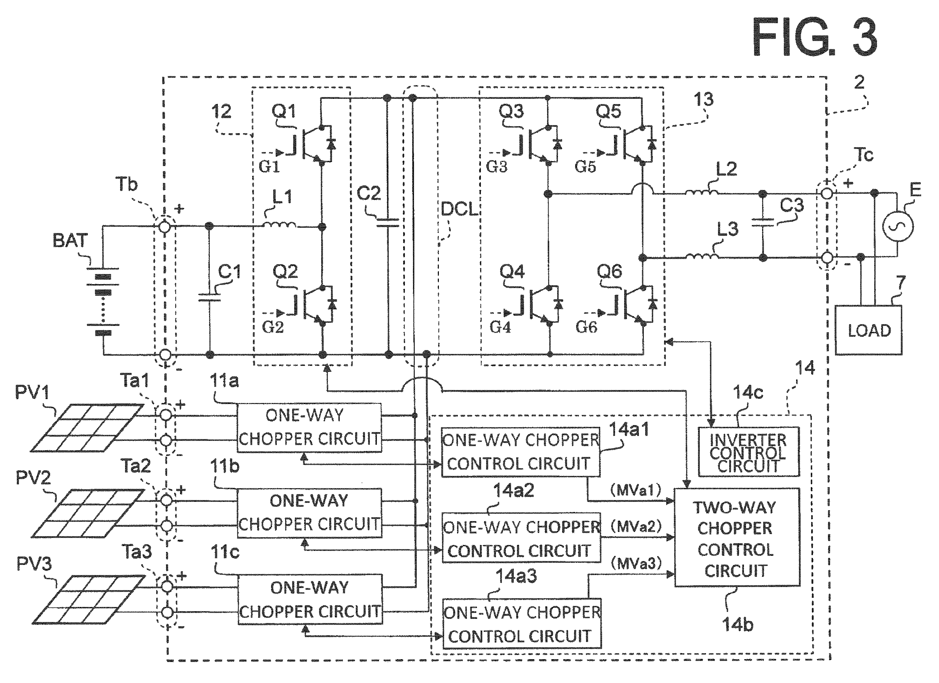

FIG. 3 is a schematic diagram of the power conversion apparatus 2 according to the second embodiment. The power conversion apparatus 2 has a two-way chopper circuit 12, an inverter circuit 13, a control unit 14, capacitors (C1 to C3), reactors (L2 and L3), and external terminals (Tb and Tc) just as in the first embodiment.

However, the power conversion apparatus 2 of the second embodiment has a plurality of systems (three in the present embodiment) of one-way chopper circuits and related circuits and terminals, and the like. That is, the power conversion apparatus 2 has external terminals (Ta1 to Ta3), one-way chopper circuits (11a to 11c), and one-way chopper control circuits (14a1 to 14a3), which are equivalent to the external terminal Ta, one-way chopper circuit 11, and one-way chopper control circuit 14 of the first embodiment.

The front end side of the one-way chopper circuit 11a is connected to the external terminal Ta1, the front end side of the one-way chopper circuit 11b is connected to the external terminal Ta2, and the front end side of the one-way chopper circuit 11c is connected to the external terminal Ta3. The rear end side of each one-way chopper circuit (11a to 11c) is connected to the DC link unit DCL. In other words, the one-way chopper circuits (11a to 11c) are connected in parallel to the DC link unit DCL. Solar cells (PV1 to PV3) also are connected one-to-one to the external terminals (Tal to Ta3).

The one-way chopper control circuit 14a1 is provided as a circuit for controlling the operation of the one-way chopper circuit 11a, the one-way chopper control circuit 14a2 is provided as a circuit for controlling the operation of the one-way chopper circuit 11b, and the one-way chopper control circuit 14a3 is provided as a circuit for controlling the operation of the one-way chopper circuit 11c. The controlled value for converting of the one-way chopper circuit 11a (determined by the one-way chopper control circuit 14a1) is designated as the controlled value MVa1, the controlled value for converting of the one-way chopper circuit 11b (determined by the one-way chopper control circuit 14a2) is designated as the controlled value MVa2, and the controlled value for converting of the one-way chopper circuit 11c (determined by the one-way chopper control circuit 14a3) is designated as the controlled value MVa3.

In the two-way chopper control circuit 14b, information of the controlled values (MVa1 to MVa3) is received from the one-way chopper control circuits (14a1 to 14a3), and the direction of operation of the two-way chopper circuit 12 and the controlled value MVb for converting are determined using this information. The guideline for that determination is common with the first embodiment in the point that the inverter output power is maintained constant to the extent possible without regard to output variation of the solar cells.

However, in the second embodiment, a plurality of (here, three MVa1 to MVa3) controlled values for converting of one-way chopper circuits is present. Therefore in the two-way chopper control circuit 14b, the direction of operation and the controlled value MVb are determined based on the information of the controlled values (MVa1 to MVa3). More specifically, the direction of operation and the controlled value MVb are determined by the procedure illustrated in the following first to third examples.

<First example>

In the two-way chopper control circuit 14b in the first example, the direction of operation and the controlled value MVb of the two-way chopper circuit 12 are determined based on the order of magnitudes of the amounts of change of the controlled values (MVa1 to MVa3). For example, in the two-way chopper control circuit 14b, the one having the largest amount of change (the one having the highest order) among the controlled values (MVa1 to MVa3) is selected.

Also in the two-way chopper control circuit 14b, the direction of operation and the controlled value MVb are determined by the same procedure as in the case of the first embodiment (except the information of the selected controlled value is used instead of the information of the controlled value MVa) based on the selected controlled value. In the first example, the direction of operation and the controlled value MVb can be selected by a comparatively simple and correct procedure despite the fact that there is a plurality of controlled values for converting of one-way chopper circuits.

<Second example>

In the two-way chopper control circuit 14b in the second example, discrimination is performed as to the directions of change (whether increasing or decreasing) of the controlled values (MVa1 to MVa3), and the direction of operation and the controlled value MVb of the two-way chopper circuit 12 are determined in accordance with the result of this discrimination. For example, in the two-way chopper control circuit 14b, the controlled values (MVa1 to MVa3) are classified (discriminated) into those that increased and those that decreased, and the one having the largest amount of change is selected from among the controlled values classified more often.

Also in the two-way chopper control circuit 14b, the direction of operation and the controlled value MVb are determined by the same procedure as in the case of the first embodiment (except the information of the selected controlled value is used instead of the information of the controlled value MVa) based on the selected controlled value. In the second example, a more correct determination is expected by adopting a majority decision concerning the direction of change of the controlled value and using only the controlled value of the majority faction for determination of the direction of operation and the controlled value MVb.

<Third example>

In the two-way chopper control circuit 14b in the third example, the direction of operation and the controlled value MVb of the two-way chopper circuit 12 are determined based on the rated output capacity (rated generating capacity) of the connected solar cell and the amount of change of the controlled value for each one-way chopper circuit (14a1 to 14a3). For example, in the two-way chopper control circuit 14b, the average controlled value MVav is calculated according to the following formula (1).

$$MVav = (MVa \times C1 + MVb \times C2 + MVc \times C3)/(C1 + C2 + C3)$$

$$... (1)$$

Here, C1 represents the rated output capacity of the solar cell PV1, C2 represents the rated output capacity of the solar cell PV2, and C3 represents the rated output capacity of the solar cell PV3.

Also in the two-way chopper control circuit 14b, the direction of operation and the controlled value MVb are determined by the same procedure as in the case of the first embodiment (except the information of the average controlled value MVav is used instead of the information of the controlled value MVa) based on the selected controlled value MVav. As is clear from formula (1), the average controlled value MVav is a quantity equivalent to the weighted average of the controlled values (MVa1 to MVa3) in the case in which weights based on the rated output capacities of the corresponding solar cells are considered. This quantity is determined by adding the controlled values MVa to MVc of each of the one-way chopper circuits 11 with weighting applied according to the magnitude of the rated output capacity of the solar cell PV connected for each one-way chopper circuit 11, and the value resulting from the addition is divided by the sum of the rated output capacities of the solar cells PV. In the third example, the direction of operation and the controlled value MVb can be determined considering not only the controlled values of the one-way chopper circuits (14a1 to 14a3) but also the rated output capacities of the solar cells.

As above, procedures for determination of the controlled value MVb, and the like, in the case in which there is a plurality of controlled values for converting of one-way chopper circuits were described with the first to third examples, but the determination procedure is not limited to these examples and may take other modes.

3. Third embodiment

A third embodiment is next described. The description of the third embodiment focuses on description of portions that are different from the first embodiment, and description of common portions is omitted.

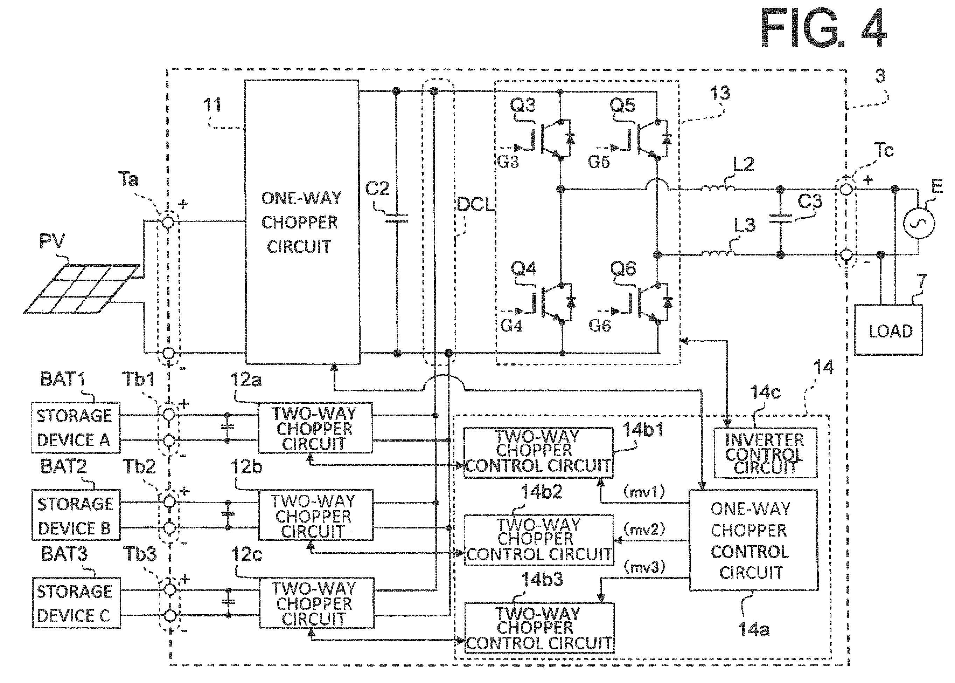

FIG. 4 is a schematic diagram of the power conversion apparatus 3 according to the third embodiment. The power conversion apparatus 3 has a one-way chopper circuit 11, an inverter circuit 13, a control unit 14, capacitors (C2 and C3), reactors (L2 and L3), and external terminals (Ta and Tc) just as in the first embodiment.
However, the power conversion apparatus 3 of the third embodiment has a plurality of systems (three in the present embodiment) of two-way chopper circuits and related circuits and terminals, and the like. That is, the power conversion apparatus 3 has external terminals (Tb1 to Tb3), two-way chopper circuits (12a to 12c), and two-way chopper control circuits (14b1 to 14b3), which are equivalent to the external terminal Tb, two-way chopper circuit 12, and two-way-chopper control circuit 14b of the first embodiment.
One end of the two-way chopper circuit 12a is connected to the external terminal Tb1, one end of the two-way chopper circuit 12b is connected to the external terminal Tb2, and one end of the two-way chopper circuit 12c is connected to the external terminal Tb3. Capacitors (equivalent to the capacitor C1 of the first embodiment) are provided between both terminals of the external terminals (Tb1 to Tb3).
The other ends of the two-way chopper circuits (12a to 12c) are connected to the DC link unit DCL. In other words, the two-way chopper circuits (12a to 12c) are connected in parallel to the DC link unit DCL. Storage devices (BAT1 to BAT3) are connected one-to-one to the external terminals (Tb1 to Tb3). The mode of the storage devices (BAT1 to BAT3) is not particularly limited, and may be a common battery, as well as a storage device placed in an electric vehicle (EV) or plug-in hybrid vehicle (PHV), or the like.
The two-way chopper control circuit 14b1 is provided as a circuit for controlling the operation of the two-way chopper circuit 12a, the two-way chopper control circuit 14b2 is provided as a circuit for controlling the operation of the two-way chopper circuit 12b, and the two-way chopper control circuit 14b3 is provided as a circuit for controlling the operation of the two-way chopper circuit 12c.
In the one-way chopper control circuit 14a, a reference variable mv1, reference variable mv2, and reference variable mv3 are sought based on the controlled value MVa for converting of the one-way chopper circuit 11. The information of the reference variable mv1 is sent to the two-way chopper control circuit 14b1, the information of the reference variable mv2 is sent to the two-way chopper control circuit 14b2, and the information of the reference variable mv3 is sent to the two-way chopper control circuit 14b3. The information of these reference variables (mv1 to mv3) is equivalent to the information of the controlled value MVa for controlling the two-way chopper circuit in the first embodiment.
In other words, in the two-way chopper control circuit 14b1, the direction of operation and the controlled value MVb for the two-way chopper control circuit 12a is determined by the same procedure as in the first embodiment (except the information of the reference variable mv1 is used instead of the controlled value MVa) based on the reference variable mv1. In the two-way chopper control circuit 14b2, the direction of operation and the controlled value MVb for the two-way chopper control circuit 12a are determined by the same procedure as in the first embodiment (except the information of the reference variable mv2 is used instead of the controlled value MVa) based on the reference variable mv2. In the two-way chopper control circuit 14b3, the direction of operation and the controlled value MVb for the two-way chopper control circuit 12c is determined by the same procedure as in the first embodiment (except the information of the reference variable mv3 is used instead of the controlled value MVa) based on the reference variable mv3.
The storage devices (BAT1 to BAT3) are assigned a priority order related to charging and discharging. This priority order is set to a higher order in correspondence with a higher degree of certainty with which a state of little charge is to be avoided. That is, any storage device is desirably charged preferentially from the device that is higher in priority order when charging is performed, and desirably discharged preferentially from the device that is lower in priority order when discharging is performed. This priority order may be specified in advance by the user, administrator, or the like, and may be automatically set by a prescribed procedure (that by which a manual setup is carried out).
In the one-way chopper control circuit 14a here, the aforementioned reference variables (mv1 to mv3) are sought based on the priority order. At that time, in the one-way chopper control circuit 14a, the reference variables (mv1 to mv3) are sought so that a state of little charge is more assuredly avoided as the storage device has a higher priority order.
In the case in which the output of the solar cell PV decreases and the inverter output power in the direction toward the grid E decreases (the controlled value MVa increases), fluctuation of the inverter output power can be suppressed by compensating from any storage device the amount of decrease of the output of the solar cell PV. In this case, in the one-way chopper control circuit 14a, the reference variables (mv1 to mv3) are sought so that a storage device being low in priority order related to charging and discharging is called on to compensate the power.
For example, in the case in which the storage device BAT3 is lowest in priority order, the reference variables (mv1 and mv2) corresponding to the storage device BAT1 and the storage device BAT2 are left in the state of the controlled values before increase (the reference variables are not changed), and the reference variable mv3 corresponding to the storage device BAT3 is set to the controlled value MVa after increase (the reference variable is increased).

The power accumulated in the storage device BAT3 is thereby used for compensation of power in the amount of the decrease of the output of the solar cell PV, and the amounts of charge of the other storage devices (BAT1 and BAT2) therefore can be prevented from decreasing to the extent possible. The reference variables (mv1 to mv3) may be sought so that compensation of power is performed by the storage device next lowest in priority order in the case in which the amount of charge of the storage device BAT3 has tracked a prescribed lower limit value.

In the case in which the output of the solar cell PV increases and the inverter output power in the direction toward the grid E increases (the controlled value MVa decreases), fluctuation of the inverter output power can be suppressed by having the increased portion of the output of the solar cell PV absorbed by any storage device. In this case, the one-way chopper control circuit 14a determines the reference variables (mv1 to mv3) so that a storage device being high in priority order related to charging and discharging is made to absorb the power.

For example, in the case in which the storage device BAT1 is highest in priority order, the reference variables (mv2 and mv3) corresponding to the storage device BAT2 and the storage device BAT3 are left in the state of the controlled values before decrease (the reference variables are not changed), and the reference variable mv3 corresponding to the storage device BAT1 is set to the controlled value MVa after decrease (the reference variable is decreased).

The storage device BAT1 is thereby used for absorbing the increased portion of power of the output of the solar cell PV, and the amount of charge of this storage device BAT1 can be prevented from decreasing to the extent possible. The reference variables (mv1 to mv3) may be sought so that absorption of power is performed by the storage device next highest in priority order in the case in which the amount of charge of the storage device BAT1 has tracked a prescribed upper limit value.

In the power conversion apparatus 3 (particularly the control unit 14) as described above, the directions of operation and the controlled values of the two-way chopper circuits (12a to 12c) are determined based on a priority order assigned in advance among the respective storage devices (BAT1 to BAT3). The specific procedure for determining the directions of operation and the controlled values based on the priority order is not limited to the abovementioned mode, and various modes can be adopted.

4. Miscellaneous

As described above, the power conversion apparatus of each embodiment has the following parts:

(A) a DC link unit DCL;
(B) a one-way chopper circuit (first voltage converter) having one end connected to the DC link unit DCL, for converting DC voltage to DC link unit DCL from a solar cell (DC power supply) connected to the other end;
(C) a two-way chopper circuit (second voltage converter) having one end connected to the DC link unit DCL, for converting DC voltage in two directions between a storage device (DC power supply) connected to the other end and the DC link unit DCL;
(D) a control unit 14 for determining a controlled value for converting respectively for the one-way chopper circuit and the two-way chopper circuit and controlling the converting operations of these circuits in accordance with the controlled values;
(E) an external terminal Tc (AC-side terminal) connected with a grid E (AC line); and
(F) an inverter circuit 13 for performing DC-AC conversion of voltage to the external terminal Tc from the DC link unit DCL and/or AC-DC conversion of voltage to the DC link unit DCL from the external terminal Tc.

Furthermore in the control unit 14, the direction of operation and the controlled value (MVb or MVb1 to MVb3) of the two-way chopper circuit are determined using information of the controlled value (MVa or MVa1 to MVa3) of the one-way chopper circuit. Therefore according to the power conversion apparatus, fluctuation of output of a solar cell, or the like, can be readily addressed.

In the control of a two-way chopper circuit, various adverse events are possible in a case where results of measurement or calculation of the output voltage from a solar cell are used without reference to the information of the controlled value of the one-way chopper circuit. For example, scattering of characteristics of circuit elements used for the power conversion apparatus or detection errors in voltage and current detection circuits may have adverse effects on the precision of control of the two-way chopper circuit, and the like. Control lags also tend to arise in control of the two-way chopper circuit, and the like. On this point, according to the power conversion apparatus according to embodiments of the present invention, such unfortunate situations (adverse effects on the precision of control, control lags, and the like) can be suppressed because the information of controlled value of the one-way chopper circuit is used.

The power conversion apparatus according to an embodiment of the present invention may have a plurality of systems for one-way chopper circuits and related circuits and terminals, and the like, as illustrated in FIG. 3, and may also have a plurality of systems for two-way chopper circuits and related circuits and terminals, and the like, as illustrated in FIG. 4. The technical elements in each of the abovementioned first to third embodiments furthermore can be combined providing that there is no contradiction.

All kinds of modifications can be added to the configuration of the present invention within a scope not deviating from the main point of the present invention. That is, the abovementioned embodiments are examples in all respects and are not to be considered as limitations. The technical scope of the present invention is indicated not by the description of the abovementioned embodiments but by the scope of the claims, and all modifications coming under the sense of equivalence and within the scope of the claims are understood to be included.

For example, the power consumed by the load 7 may be detected and this consumed power may be used as a power output instruction. In this case, the two-way chopper control circuit 14b determines the controlled value of the two-way chopper circuit 12 so that a deficiency is compensated for in the case in which the DC power stepped up by the one-way chopper circuit 11 is lower than the consumed power, and determines the controlled value of the two-way chopper circuit 12 so that the storage device BAT absorbs a surplus in the case in which the DC power stepped up by the one-way chopper circuit 11 is higher than the consumed power of the load 7. Thus, reverse power flow to the grid E can be prevented, and the power generated by solar cells 1 can be consumed among more (or all) consumers provided with the power conversion apparatus 2.

INDUSTRIAL APPLICABILITY

The present invention makes available a power conversion apparatus for converting voltage.

[Key to Symbols]

| | |
|---|---|
| 1 to 3 | Power conversion apparatus |
| 7 | Load |
| 11, 11a to 11c | One-way chopper circuit (first voltage converter) |
| 12, 12a to 12c | Two-way chopper circuit (second voltage converter) |
| 13 | Inverter circuit |
| 14 | Control unit |
| 14a, 14a1 to 14a3 | One-way chopper control circuit |
| 14b, 14b1 to 14b3 | Two-way chopper control circuit |
| 14c | Inverter control circuit |
| BAT, BAT1 to BAT3 | Storage device |
| C1 to C3 | Capacitor |
| D1 | Diode |
| DCL | DC link unit |
| E | Grid |
| L1 to L4 | Reactor |
| PV, PV1 to PV3 | Solar cell |
| Q1 to Q7 | Switching element |
| Ta to Tc | External terminal |

Claims

1.  A power conversion apparatus comprising:

a DC link unit;
a first voltage converter for converting the voltage of DC power outputted from a DC power supply and supplying the converted DC power to said DC link unit;
a second voltage converter connected between said DC link unit and a battery, and adapted for converting voltage of DC power inputted from one of said DC link unit and said battery and supplying the converted DC power to the other;
a control unit for determining a controlled value for converting for each of said first voltage converter and said second voltage converter and controlling the converting operations of these circuits in accordance with the controlled values;

an AC-side terminal to which an AC line is connected; and

an inverter circuit for converting DC power supplied to said DC link unit to AC power and providing the AC power to said AC-side terminal; wherein:

> in said control unit, the controlled value of said first voltage converter is used to determine the controlled value of said second voltage converter so that the AC power outputted from said inverter circuit tracks a prescribed value.

2. The power conversion apparatus according to claim 1, **characterized in that** in said control circuit:

> in a case where the second voltage converter is to supply power to said DC link unit, the controlled value of said second voltage converter is changed so that the converting extent of said second voltage converter increases when the controlled value of said first voltage converter is changed so that the converting extent of said first voltage converter increases, and the controlled value of said second voltage converter is changed so that the converting extent of said second voltage converter decreases when the controlled value of said first voltage converter is changed to that the converting extent of said first voltage converter decreases; and
>
> in a case where the second voltage converter is to supply power to said storage device, the controlled value of said second voltage converter is changed so that the converting extent of said second voltage converter decreases when the controlled value of said first voltage converter is changed so that the converting extent of said first voltage converter increases, and the controlled value of said second voltage converter is changed so that the converting extent of said second voltage converter increases when the controlled value of said first voltage converter is changed so that the converting extent of said first voltage converter decreases.

3. The power conversion apparatus according to claim 1 or 2, wherein said control unit determines the controlled value of said first voltage converter so that the output of the DC power supply connected to said first voltage converter is maximized.

4. The power conversion apparatus according to any of claims 1 to 3, a plurality of said first voltage converters being connected in parallel to said DC link unit; **characterized in that**:

> said control unit determines the controlled value of said second voltage converter using said controlled value maximally changed among the controlled values of each of said first voltage converters.

5. The power conversion apparatus according to any of claims 1 to 3, a plurality of said first voltage converters being connected in parallel to said DC link unit; **characterized in that**:

> said control unit discriminates whether the controlled values of each of said first voltage converters have decreased or increased, and determines, as a result of the discriminating, the controlled value of said second voltage converter using a more frequently discriminated controlled value.

6. The power conversion apparatus according to any of claims 1 to 3, a plurality of said first voltage converters being connected in parallel to said DC link unit; **characterized in that**:

> said control unit adds, with weighting, the controlled values of each of said first voltage converters according to the magnitude of the rated output of said DC power supply connected for each of said first voltage converters, and determines the controlled value of said second voltage converter using said added value.

7. The power conversion apparatus according to any of claims 1 to 6, a plurality of said second voltage converters being connected in parallel to said DC link unit; **characterized in that**:

> said control unit determines the controlled values of each of said second voltage converters based on a pre-assigned priority order relating to charging and discharging among each of said storage devices.

8. The power conversion apparatus according to any of claims 1 to 7, **characterized in that**:

> a grid is connected to said AC-side terminal; and
> said inverter circuit converts the DC power supplied to said DC link unit to AC power synchronized to said grid, and supplies this AC power to a load superimposed on AC power of said grid.

9. The power conversion apparatus according to claim 8, **characterized in that** power consumed by said load is detected, and, in a case where the DC power converted by said first voltage converter is lower than said consumed power, the controlled value of said second voltage converter is determined so that a deficit is compensated for, and, in a case where the DC power converted by said first voltage converter is higher than said consumed power, the controlled value of said second voltage converter is determined so that a surplus is absorbed by said storage device.

# FIG. 1

EP 2 738 927 A1

# FIG. 2

TO DC LINK UNIT DCL
(POSITIVE ELECTRODE SIDE)

TO EXTERNAL TERMINAL TA
(POSITIVE ELECTRODE SIDE)

TO EXTERNAL TERMINAL TA
(NEGATIVE ELECTRODE SIDE)

L4

D1

C4

Q7

C5

11

TO DC LINK UNIT DCL
(NEGATIVE ELECTRODE SIDE)

TO TWO-WAY CHOPPER
CONTROL CIRCUIT 14B

(Ii)

(Vpv)

(Vd)

14a

(G7)

(MVa)

23

22

MPPT
CONTROLLER

PI
CONTROLLER

21

(Vr)

26

(TRI)

EP 2 738 927 A1

FIG. 3

EP 2 738 927 A1

FIG. 4

EP 2 738 927 A1

## INTERNATIONAL SEARCH REPORT

| | International application No. |
|---|---|
| | PCT/JP2012/067345 |

A. CLASSIFICATION OF SUBJECT MATTER
*H02M3/155*(2006.01)i, *G05F1/67*(2006.01)i, *H02M7/48*(2007.01)i

According to International Patent Classification (IPC) or to both national classification and IPC

B. FIELDS SEARCHED

Minimum documentation searched (classification system followed by classification symbols)
H02M3/155, G05F1/67, H02M7/48

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2006-60984 A (Matsushita Ecology Systems Co., Ltd.), 02 March 2006 (02.03.2006), entire text; all drawings (Family: none) | 1-9 |
| A | JP 2001-238354 A (Matsushita Electric Industrial Co., Ltd.), 31 August 2001 (31.08.2001), entire text; all drawings (Family: none) | 1-9 |
| A | JP 2006-67672 A (Matsushita Electric Industrial Co., Ltd.), 09 March 2006 (09.03.2006), paragraphs [0086] to [0091]; fig. 13 (Family: none) | 1-9 |

☒ Further documents are listed in the continuation of Box C. ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 06 September, 2012 (06.09.12) | 18 September, 2012 (18.09.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2012/067345

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2006-74947 A  (Matsushita Electric Industrial Co., Ltd.), 16 March 2006 (16.03.2006), entire text; all drawings (Family: none) | 1-9 |
| A | JP 2011-36086 A  (Honda Motor Co., Ltd.), 17 February 2011 (17.02.2011), entire text; all drawings & US 2011/0032733 A1 | 1-9 |
| A | JP 2002-369406 A  (Hitachi, Ltd.), 20 December 2002 (20.12.2002), entire text; all drawings (Family: none) | 1-9 |

Form PCT/ISA/210 (continuation of second sheet) (July 2009)

## REFERENCES CITED IN THE DESCRIPTION

**Patent documents cited in the description**

- JP 2003009537 A